# FASCICULE DE BREVET EUROPEEN

(11) **EP 4 275 222 B1**
(45) Date de publication et mention de la délivrance du brevet: **30.10.2024**
(21) Numéro de dépôt: 22704936.8
(22) Date de dépôt: 31.01.2022
(51) Int. Cl.: H01J 31/50, G02B 23/12, H01J 29/06, G02B 25/00

(54) **DISPOSITIF INTENSIFICATEUR D'IMAGE AVEC ALIMENTATION DISPOSÉE EN AMONT DE LA PHOTOCATHODE**
BILDVERSTÄRKERVORRICHTUNG MIT VOR DER PHOTOKATHODE ANGEORDNETER STROMVERSORGUNG
IMAGE INTENSIFIER DEVICE WITH POWER SUPPLY UPSTREAM OF THE PHOTOCATHODE

(30) Priorité: 02.02.2021 FR 2100975
(43) Date de publication de la demande: 15.11.2023
(73) Titulaire: Photonis France, 19100 Brive-La-Gaillarde (FR)
(72) Inventeur: LAURENT, Nicolas, 19100 Brive-la-Gaillarde (FR); DE LA TORRE NOETZEL, Jorge, 28027 Madrid (ES); RODRIGUEZ-PEREZ, Diego, 28027 Madrid (ES); FERNANDEZ GUTIERREZ, David, 28027 Madrid (ES)
(74) Mandataire: Cabinet Laurent & Charras
(86) Numéro de dépôt international: PCT/FR2022/050167
(87) Numéro de publication internationale: WO 2022/167749

(56) Documents cités:
- WO-A1-2016/032326
- FR-A1- 3 097 658
- US-A1- 2009 108 180

## Description

### DOMAINE TECHNIQUE

Le domaine de l'invention est celui des dispositifs intensificateurs d'image, utilisés pour l'observation d'une scène faiblement éclairée, notamment une scène nocturne.

### ÉTAT DE LA TECHNIQUE ANTÉRIEURE

Un dispositif intensificateur d'image est basé sur le principe d'amplification de la lumière par successivement une conversion photon-électron opérée par une photocathode, une multiplication du nombre des électrons par émission secondaire, et une conversion finale électron-photon opérée par un écran luminescent nommé écran phosphore.

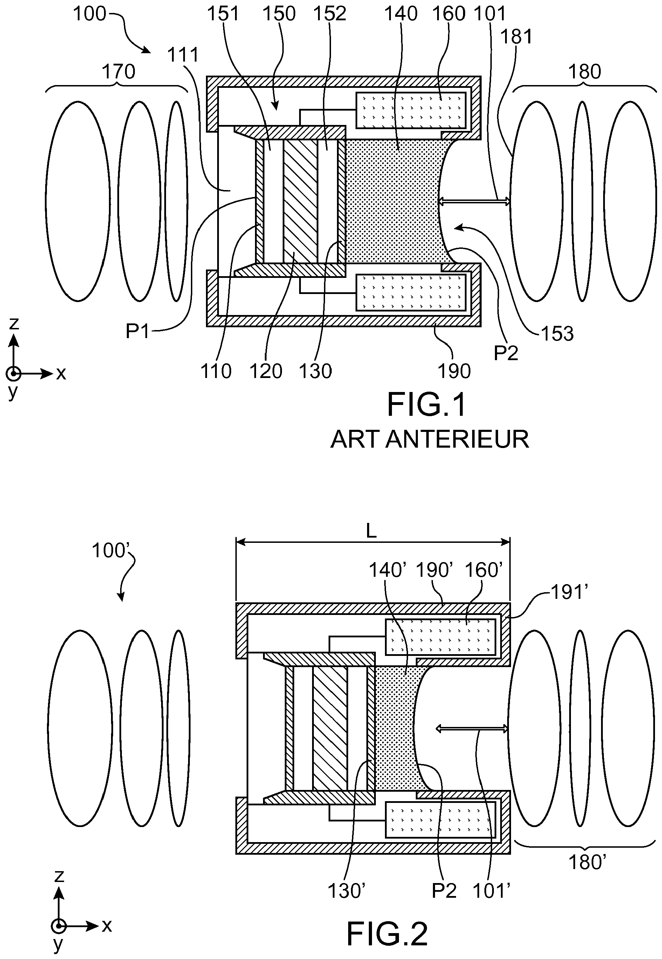

La figure 1 illustre de façon schématique un dispositif intensificateur d'image 100 selon l'art antérieur. Le dispositif intensificateur d'image comporte les éléments suivants, agencés les uns à la suite des autres, dans cet ordre :
- une photocathode 110;
- une galette de micro-canaux 120, ou MCP pour l'anglais « *microchannel plate* » ; et
- un élément de conversion électrons-photons 130.

La photocathode 110 est disposée du côté de l'entrée du dispositif intensificateur d'image 100. En utilisation, elle est polarisée par une première tension de polarisation. Cet étage est apte à convertir un faisceau incident de photons en un faisceau initial d'électrons, par effet photoélectrique.

La galette de micro-canaux 120 est un composant en verre, traversée par une multitude de micro-canaux. En utilisation, elle est polarisée par une deuxième tension de polarisation. Cet étage permet la multiplication des charges électriques, par émission secondaire. Un champ interne est créé par l'application de ladite deuxième tension de polarisation, appliquée entre les deux faces (entrée et sortie) de la galette de micro-canaux. Lorsqu'un électron entre dans un micro-canal et percute sa paroi, cela provoque l'émission de plusieurs électrons dits secondaires. Les électrons secondaires sont accélérés par le champ interne dans la galette de micro-canaux 120 et percutent à leur tour la paroi du micro-canal, ce qui provoque l'émission de nouveaux électrons secondaires. Il s'agit donc d'un phénomène en cascade. Dans le dispositif intensificateur d'image 100, la galette de micro-canaux 120 est configurée pour recevoir le faisceau d'électrons initial émis par la photocathode 110, et pour envoyer en réponse un faisceau intensifié d'électrons. Chaque électron du faisceau d'électrons initial arrivant de la photocathode génère l'émission d'une pluralité d'électrons du faisceau intensifié d'électrons.

Dans la suite, l'élément de conversion électron-photon 130 est nommé simplement « élément de conversion ». En utilisation, il est polarisé par une troisième tension de polarisation. Il est configuré pour recevoir le faisceau intensifié d'électrons, et pour émettre en réponse un faisceau intensifié de photons. Chaque électron du faisceau intensifié d'électrons est à l'origine d'un photon respectif du faisceau intensifié de photons. La répartition de lumière dans le faisceau intensifié de photons correspond donc à la répartition de lumière dans le faisceau de photons incident sur la photocathode, fortement amplifiée par l'émission en cascade au niveau de la galette de micro-canaux. Ainsi, une image bas niveau de lumière, fournie au niveau de la photocathode, est transformée en une image de luminosité suffisante pour y distinguer des objets à l'œil nu. L'élément de conversion 130 est constitué de préférence d'un écran phosphore.

La photocathode 110, la galette de micro-canaux 120 et l'élément de conversion 130 s'étendent les uns à la suite des autres, dans cet ordre, le long de l'axe (Ox). La galette de micro-canaux 120 se trouve donc entre la photocathode 110 et la galette de micro-canaux 120. On peut définir un sens de circulation des photons et des électrons dans le dispositif intensificateur d'image, qui correspond donc ici à l'axe (Ox), orienté de la photocathode 110 vers l'élément de conversion 130.

Dans tout le texte, les termes « amont » et « aval » se rapportent au sens de circulation des photons et des électrons dans le dispositif intensificateur d'image.

La photocathode 110, la galette de micro-canaux 120, et l'élément de conversion 130 s'étendent tous les trois à l'intérieur d'une chambre étanche, ou tube intensificateur 150, à l'intérieur de laquelle règle une très basse pression. Le niveau de pression dans le tube intensificateur 150 est nommé « ultra vide » par l'homme du métier. A l'intérieur du tube intensificateur 150 s'étendent ici deux zones 151, 152, sous pression ultra vide. Lesdites zones 151, 152 s'étendent respectivement entre la photocathode 110 et la galette de micro-canaux 120, et entre la galette de micro-canaux 120 et l'élément de conversion 130. Ici, la photocathode 110 est constituée d'un revêtement déposé sur un hublot 111, ledit hublot formant une fenêtre d'entrée du tube intensificateur 150.

Dans l'exemple illustré à la figure 1, le dispositif intensificateur d'image comporte en outre un réseau de fibres optiques 140, qui s'étend en aval de l'élément de conversion 130, de sorte que l'élément de conversion 130 se trouve entre la galette de micro-canaux 120 et le réseau de fibres optiques 140. Le tube intensificateur 140 est alors fermé, à son extrémité opposée à la photocathode 110, par l'une des extrémités du réseau de fibres optiques 140. L'élément de conversion 130 se présente sous la forme d'une multicouche de grains micrométriques luminescents. Chaque grain luminescent s'étend sur une ou plusieurs fibres optiques du réseau de fibres optiques 140, du côté de la galette de micro-canaux 120.

Le réseau de fibres optiques 140 est configuré pour inverser (c'est-à-dire pivoter à 180°), une image fournie en entrée. Dit autrement, une image fournie en entrée du réseau de fibres optiques est pivotée de 180° autour de l'axe (Ox), entre l'entrée et la sortie du réseau de fibres optiques. Ladite image est en outre translatée d'une extrémité à l'autre du réseau de fibres optiques 140, ici le long de l'axe (Ox). L'agencement des fibres optiques à l'entrée du réseau de fibres optiques (du côté de la galette de micro-canaux 120), et l'agencement des fibres optiques à la sortie du réseau de fibres optiques (du côté opposé à la galette de micro-canaux 120), sont symétriques l'un de l'autre selon une symétrie circulaire d'angle 180°=π. Le réseau de fibres optiques 140 permet de pivoter à 180° l'image intensifiée obtenue au niveau de l'élément de conversion 130, de sorte qu'en utilisation elle soit vue « à l'endroit » par l'utilisateur. Il s'agit ainsi de compenser l'inversion d'image apportée par l'objectif 170 mentionné plus loin.

L'ensemble comportant la photocathode 110, la galette de micro-canaux 120, l'élément de conversion 130, et le réseau de fibres optiques 140, est inséré entre un objectif 170 et un oculaire 180.

L'objectif 170 est constitué par un ensemble d'une ou plusieurs optiques réfractives, ou lentilles. Il est configuré pour réaliser la conjugaison optique entre une surface de mise au point, ou surface objet, au niveau de laquelle se trouve une scène à observer et/ou imager, et une surface de formation d'image initiale P1 située à l'intérieur ou en entrée du tube intensificateur 150. Ici, la surface de formation d'image initiale P1 s'étend directement sur la photocathode 110, sur la surface active de cette dernière.

L'oculaire 180 est constitué par un ensemble d'une ou plusieurs optiques réfractives, ou lentilles. Il est configuré pour réaliser la conjugaison optique entre une surface de formation d'image intensifiée P2, et une surface image située à l'extérieur du tube intensificateur 150.

La surface de formation d'image intensifiée P2 désigne une surface sur laquelle, en utilisation, une image intensifiée est formée par les photons émis par l'élément de conversion 130. Le cas échéant, il s'agit de la surface vérifiant cette condition, et qui est la plus proche de la sortie optique 153 du tube intensificateur 150. La sortie optique 153 du tube intensificateur 150 désigne une interface par où, en utilisation, le faisceau intensifié de photons émis par l'élément de conversion 130 émerge dans l'espace libre. Ici, la sortie optique 153 du tube intensificateur 150 est formée par une extrémité du réseau de fibres optiques 140, du côté opposé à la galette de micro-canaux 120. La surface de formation d'image intensifiée P2 passe alors par les faces de sortie des fibres optiques du réseau de fibres optiques 140, du côté opposé à la galette de micro-canaux 120. L'image intensifiée, formée au niveau de la surface P2, correspond à l'image formée au niveau de l'élément de conversion 130, déportée et pivotée par le réseau de fibres optiques 140.

La surface image correspond de préférence à une surface vue nette par l'utilisateur, pour un oeil au repos regardant à travers l'oculaire 180. Pour un confort visuel optimal, l'oculaire 180 peut être ajustable en dioptrie. En utilisation, un utilisateur place son oeil derrière l'oculaire 180, du côté opposé au réseau de fibres optiques 140. La surface image et la rétine de l'œil sont alors optiquement conjuguées par un système optique formé par les éléments de l'œil entre la rétine et la cornée, et le cas échéant une optique de correction de la vue telle qu'une lentille de contact. Pour un oeil emmétrope, la surface image s'étend à l'infini.

Chacun parmi la photocathode 110, la galette de micro-canaux 120, et l'élément de conversion 130, est relié à un module d'alimentation électrique 160, qui lui fournit une tension de polarisation respective (nommée respectivement première, deuxième et troisième tension de polarisation). Le module d'alimentation électrique 160 est relié en entrée à une source électrique basse tension (non représentée), par exemple une pile. Il est configuré pour convertir la basse tension ainsi reçue, en au moins une haute tension formant respectivement les première, deuxième et troisième tensions de polarisation, et pour fournir ces tensions de polarisation à chacun parmi la photocathode 110, la galette de micro-canaux 120, et l'élément de conversion 130.

Le module d'alimentation électrique 160 et le tube intensificateur 150 s'étendent ensemble à l'intérieur d'un logement 190, généralement en forme de tube.

Comme illustré à la figure 1, le module d'alimentation électrique 160 s'étend autour du réseau de fibres optiques 140.

La figure 1 montre également une flèche 101 symbolisant le tirage optique de l'oculaire 180, ou en d'autres termes la distance requise entre la surface de formation d'image intensifiée P2 (ici en sortie du réseau de fibres optiques 140), et l'oculaire 180 (au niveau d'une interface 181 de l'oculaire 180 située au regard de l'élément de conversion 130). Le tirage optique 101 correspond à la distance permettant que l'oculaire 180 réalise la conjugaison optique entre la surface de formation d'image intensifiée P2, et la surface image vue nette par l'utilisateur, en utilisation.

US 2009/108180 A1 et WO 2016/032326 A1 divulguent un dispositif intensificateur d'image selon le préambule de la présente revendication 1.

Un objectif de la présente invention est de proposer un dispositif intensificateur d'image, apte à présenter un encombrement réduit en comparaison avec les dispositifs intensificateurs d'image selon l'art antérieur.

### EXPOSÉ DE L'INVENTION

Cet objectif est atteint avec un dispositif intensificateur d'image selon la revendication 1.

L'élément de conversion peut également être nommé « élément de conversion photon-électrons ».

En utilisation, chaque électron incident sur la galette de micro-canaux génère l'émission d'un grand nombre d'électrons secondaires, de préférence plus d'une dizaine.

Une solution pour réduire l'encombrement d'un dispositif intensificateur d'image, du type de celui représenté en figure 1, consiste à réduire la longueur du réseau de fibres optiques. Des développements récents ont permis en effet de réaliser un réseau de fibres apte à inverser une image d'entrée, et présentant une longueur réduite tout en préservant les requis de transmission optique et de contraste permettant de fournir une qualité d'image conforme.

La figure 2 , ne faisant pas partie de la présente invention, illustre un dispositif intensificateur d'image 100', qui ne diffère de celui de la figure 1 qu'en ce que le réseau de fibres optiques 140' présente une longueur réduite. Comme dans l'art antérieur, l'élément de conversion 130' s'étend en entrée du réseau de fibres optiques, et la surface de formation d'image intensifiée P2 se trouve au niveau de la sortie du réseau de fibres optiques 140. Du fait de la longueur réduite du réseau de fibres optiques 140', la surface de formation d'image intensifiée P2 se trouve significativement en retrait par rapport à la sortie du logement 190'. Afin de maintenir la distance requise entre la surface de formation d'image intensifiée P2 et l'oculaire 180', il est donc nécessaire de rapprocher le logement 190' et l'oculaire 180'. L'oculaire 180' pourra être rapproché du logement 190', au maximum jusqu'à une position extrême dans laquelle l'oculaire 180' est appuyé contre un bord de sortie 191' du logement 190'. Le bord de sortie 191' du logement 190' désigne son bord le plus éloigné de l'objectif 170. Si la réduction de longueur du faisceau de fibres optiques 140' est importante, même dans cette position extrême il est impossible d'obtenir que la distance entre la surface de formation d'image intensifiée P2 et l'oculaire 180' soit égale au tirage optique 101' de l'oculaire (voir figure 2). L'homme du métier pourra alors avoir l'idée de réduire la longueur L du logement 190', pour diminuer une distance entre la surface de formation d'image intensifiée P2 et le bord de sortie 191' du logement 190'. Cependant, il se trouvera limité par l'encombrement du module d'alimentation électrique 160'. La solution évidente pour palier à ce problème consiste à miniaturiser ce module d'alimentation électrique 160'.

Une idée à la base de l'invention consiste alors à reconsidérer entièrement l'agencement des différents éléments dans le dispositif intensificateur d'image, et à déplacer le module d'alimentation électrique, au lieu de simplement modifier ses dimensions. Selon l'invention, le module d'alimentation électrique est déplacé vers une région située du côté amont de la photocathode selon le sens de circulation des photons et des électrons dans le dispositif intensificateur d'image (c'est-à-dire du côté de la photocathode opposé à la galette de micro-canaux). Ce nouvel emplacement permet de rapprocher la surface de formation d'image intensifiée P2 et le bord de sortie 191' du logement 190', sans aucune restriction. Il devient alors possible de respecter la distance requise entre la surface de formation d'image intensifiée et l'oculaire, tout en ayant un faisceau de fibres optiques de longueur réduite. En outre, puisque le module d'alimentation électrique est déplacé plutôt que miniaturisé, il n'est pas nécessaire que ce dernier soit entièrement modifié pour y intégrer des composants internes miniaturisés.

Le fait de déplacer le module d'alimentation électrique n'est pas une solution évidente pour l'homme du métier. Ce dernier est plutôt incité à conserver les agencements antérieurs, notamment pour éviter d'avoir à redimensionner les différents logements et capots dans le dispositif intensificateur d'image, et pour éviter d'avoir à reconsidérer des problématiques d'isolation électrique autour du module d'alimentation électrique ainsi que la connectique (fils d'alimentation haute tension conduisant des courants très faibles).

Ce nouvel emplacement du module d'alimentation électrique libère un espace situé du côté aval de l'élément de conversion, selon le sens de circulation des photons et des électrons dans le dispositif intensificateur d'image. La libération de cet espace permet de diminuer un encombrement du dispositif intensificateur d'image. La libération de cet espace permet par exemple de réduire une distance entre l'élément de conversion et un élément annexe tel qu'un oculaire. Cet avantage technique se retrouve en présence d'un faisceau de fibres optiques en aval de l'élément de conversion, mais également en l'absence d'un tel faisceau de fibres optiques.

Le module d'alimentation électrique s'étend en périphérie d'un objectif tel que décrit en référence à la figure 1. Le diamètre de l'objectif pouvant être inférieur à celui du tube intensificateur, on peut exploiter un espace autour de l'objectif, pour y loger le module d'alimentation électrique sans que cela n'augmente le diamètre total du dispositif intensificateur d'image.

De préférence, le module d'alimentation électrique s'étend à l'extérieur du tube intensificateur.

Le dispositif selon l'invention comporte en outre un premier ensemble de lentilles, nommé objectif, configuré pour conjuguer optiquement une surface de mise au point située à l'extérieur tube intensificateur, et une surface de formation d'image initiale située à l'intérieur ou en entrée du tube intensificateur, et le module d'alimentation électrique s'étend en périphérie de l'objectif.

Avantageusement, le module d'alimentation électrique ne dépasse pas au-delà de l'objectif, de part et d'autre de ce dernier et le long d'un axe parallèle à l'axe optique de ce dernier.

Le module d'alimentation électrique comporte de préférence une ouverture traversante qui s'étend au regard de la photocathode. Le module d'alimentation électrique peut avoir une forme d'anneau.

Selon un mode de réalisation avantageux, le dispositif selon l'invention comporte en outre un faisceau de fibres optiques, disposé en aval de l'élément de conversion dans le sens de propagation des photons et des électrons dans le dispositif intensificateur d'image, avec les fibres optiques du faisceau de fibres optiques agencées de manière à pivoter sur elle-même une image fournie en entrée du faisceau de fibres optiques, et avec une surface de sortie du faisceau de fibres optiques, du côté opposé à l'élément de conversion, qui forme une surface nommée surface de formation d'image intensifiée.

Selon un autre mode de réalisation avantageux, le dispositif selon l'invention comporte en outre support transparent, avec l'élément de conversion formé par un revêtement recouvrant une partie au moins d'une face dudit support transparent, et avec ladite face du support transparent qui forme une surface nommée surface de formation d'image intensifiée.

Le dispositif selon l'invention peut comporter en outre un second ensemble de lentilles, nommé oculaire, configuré pour conjuguer optiquement la surface de formation d'image intensifiée et une surface image située à l'extérieur du tube intensificateur. Le dispositif selon l'invention peut comporter en outre un module de formation d'image complémentaire, configuré pour fournir une image complémentaire, ainsi qu'un élément partiellement réfléchissant, qui s'étend entre l'oculaire et la surface de formation d'image intensifiée et qui est configuré pour superposer l'image complémentaire et une image intensifiée formée au niveau de la surface de formation d'image intensifiée.

Selon une variante avantageuse, le dispositif selon l'invention peut comporter en outre un élément de déport, configuré pour déporter latéralement une image intensifiée provenant directement ou indirectement de la surface de formation d'image intensifiée. L'élément de déport peut être au moins partiellement transparent dans le visible, pour autoriser la superposition de l'image intensifiée déportée par l'élément de déport, avec une vue en transparence d'une scène environnante.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
[Fig. 1] illustre de manière schématique un dispositif intensificateur d'image selon l'art antérieur;
[Fig. 2] illustre de manière schématique un dispositif intensificateur d'image, ne faisant pas partie de la présente invention, intégrant un réseau de fibres optiques de longueur réduite ;
[Fig. 3] illustre de manière schématique un dispositif intensificateur d'image selon un premier mode de réalisation de l'invention ;
[Fig. 4A] et [Fig. 4B] illustrent de manière schématique deux exemples d'agencement du module d'alimentation électrique dans un dispositif intensificateur d'image selon l'invention ;
[Fig. 5] illustre de manière schématique un dispositif intensificateur d'image selon un deuxième mode de réalisation de l'invention ; et
[Fig. 6] illustre de manière schématique un dispositif intensificateur d'image selon un troisième mode de réalisation de l'invention.

### EXPOSÉ DÉTAILLÉ DE MODES DE RÉALISATION PARTICULIERS

Pour plus de clarté, on a représenté sur les figures les axes d'un repère orthonormé (Oxyz). Ici, l'axe (Ox) correspond au sens de propagation de la lumière dans le dispositif intensificateur d'image selon l'invention.

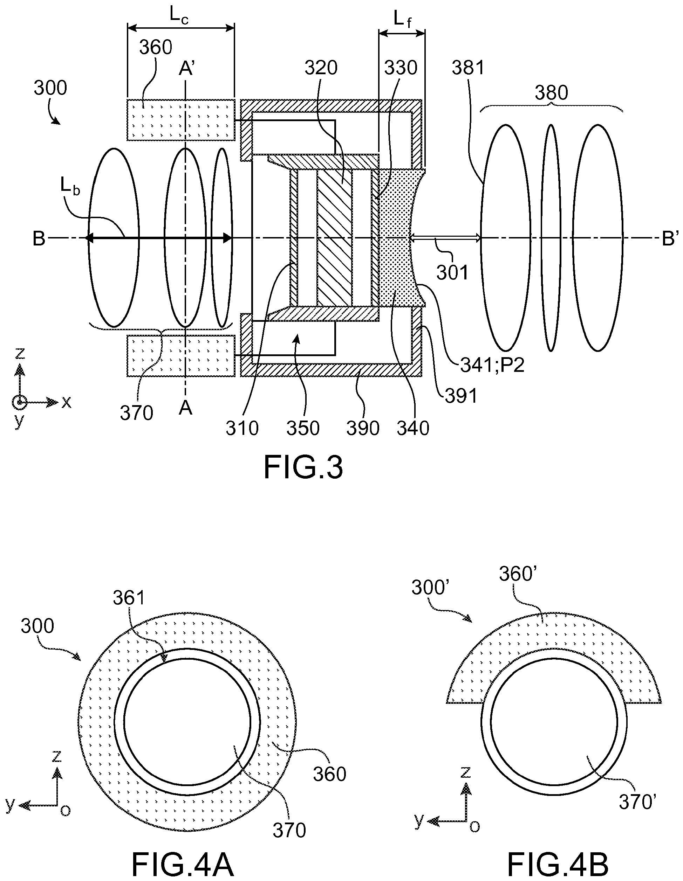

La figure 3 illustre de manière schématique, selon une vue en coupe, un dispositif intensificateur d'image 300 selon un premier mode de réalisation de l'invention. Le dispositif intensificateur d'image 300 ne sera décrit que pour ses différences relativement au mode de réalisation de la figure 1.

Ici, le module d'alimentation électrique 360 ne s'étend pas autour du réseau de fibres optiques 340, et le réseau de fibres optiques 340 présente une longueur réduite.

Le module d'alimentation électrique 360 s'étend ici en périphérie de l'objectif 370, dans une région située en amont de la photocathode 310, c'est-à-dire du côté de la photocathode 310 opposé à la galette de micro-canaux 320 et à l'élément de conversion 330.

Comme précédemment, la photocathode 310, la galette de micro-canaux 320, l'élément de conversion 330 s'étendent à l'intérieur d'un tube intensificateur 350 tel que décrit en introduction. Le tube intensificateur 350 s'étend lui-même, avec le réseau de fibres optiques 340, à l'intérieur d'un logement 390. La photocathode 310, la galette de micro-canaux 320 et l'élément de conversion 330 s'étendent ici chacune dans des plans parallèles au plan (Oyz).

Comme précédemment, on définit sur le logement 390 un bord de sortie 391, situé du côté du réseau de fibres optiques 340 et faisant face à l'oculaire 380. Le bord de sortie 391 du logement 390 s'étend ici dans un plan (yOz), parallèle au plan de la galette de galette de micro-canaux 320.

La surface de formation d'image intensifiée, P2, telle que décrite en introduction, est située ici sur l'extrémité de sortie du réseau de fibres optiques 340. La surface de formation d'image intensifiée, P2, est constituée en particulier par une surface passant par les faces de sortie des fibres optiques du réseau de fibres optiques 340, du côté des fibres optiques opposé à la galette de micro-canaux 320. La surface de formation d'image intensifiée P2 est ici une surface non plane, dont la topologie suit celle d'une première interface 381 appartenant à l'oculaire 380, où ladite première interface 381 est située du côté l'élément de conversion 330.

Le module d'alimentation électrique 360 ne s'étend pas autour du réseau de fibres optiques 340, mais dans une région située en amont de la photocathode 310. Ainsi, même avec une longueur réduite Lf du réseau de fibres optiques 340, le bord de sortie 391 du logement 390 est proche de l'extrémité de sortie 341 du réseau de fibres optiques 340. Le bord de sortie 391 du logement 390 est donc proche de la surface de formation d'image intensifiée P2. Ainsi, malgré un réseau de fibres optiques 340 de longueur réduite Lf, la distance entre la surface de formation d'image intensifiée P2 et la première interface 381 appartenant à l'oculaire 380, est égale au tirage optique 301 de l'oculaire 380 (tel que défini en introduction).

Le module d'alimentation électrique 360 s'étend ici en périphérie de la photocathode 310, dans une projection orthogonale de ces derniers dans un plan parallèle au plan (Oyz).

Ici, le réseau de fibres optiques 340 dépasse légèrement à l'extérieur du logement 390. La surface de formation d'image intensifiée P2 s'étend donc à l'extérieur du logement 390.

Le module d'alimentation électrique 360 est situé ici à l'extérieur du tube intensificateur 350 et du logement 390. Il présente ici une longueur Le, mesurée selon l'axe (Ox), strictement inférieure à la longueur Lb de l'objectif 370, mesurée selon le même axe. En outre, il ne dépasse pas au-delà de l'objectif 370, le long de l'axe (Ox) (parallèle à l'axe optique BB' de l'objectif 370).

La figure 4A illustre le dispositif intensificateur d'image 300, selon une vue en coupe dans un plan AA' parallèle au plan (yOz) et passant par le module d'alimentation électrique 360. La figure 4A montre que le module d'alimentation électrique 360 entoure l'objectif 370, sur 380° d'angle. Dit autrement, le module d'alimentation électrique 360 est muni d'une ouverture traversante 361, à l'intérieur de laquelle s'étend l'objectif 370. L'ouverture traversante 361 est située au regard de la photocathode 310. De préférence, l'ouverture traversante 361 à la forme d'un cylindre de révolution, d'axe de révolution orthogonal au plan (Oyz) de la photocathode 310 et passant de préférence par le centre de cette dernière. Ici, mais de manière non limitative, le module d'alimentation électrique 360 présente une forme de premier cylindre de révolution, ouvert au centre par une ouverture traversante 361 en forme de second cylindre de révolution concentrique avec le premier cylindre de révolution. Dit autrement, le module d'alimentation électrique 360 a une forme d'anneau. Dans des variantes non représentées, le module d'alimentation électrique 360 a une forme quelconque, munie d'une ouverture traversante en forme de cylindre de révolution tel que décrite ci-dessus. Selon d'autres variantes encore, l'ouverture au centre n'est pas en forme de cylindre de révolution, mais présente une forme quelconque apte à laisser passer la lumière jusqu'à la photocathode 310.

Dans une variante 300' illustrée en figure 4B, le module d'alimentation électrique 360' n'entoure l'objectif 370 que sur un angle inférieur ou égal à 180°.

De nombreuses autres formes de module d'alimentation électrique peuvent être mises en oeuvre, sans sortir du cadre de l'invention, notamment des formes dans lesquelles le module d'alimentation électrique n'est pas centré sur l'axe optique BB'.

De préférence, le module d'alimentation électrique 360 ne dépasse pas au-delà du logement 390, dans une projection orthogonale de ces derniers dans un plan(Oyz). Dit autrement, la projection orthogonale du module d'alimentation électrique 360, dans un plan (yOz), est inscrite à l'intérieur de la projection orthogonale du logement 390 dans le même plan. Pour cela, le diamètre maximum de l'objectif 370 est strictement inférieur au diamètre externe du logement 390, et le module d'alimentation électrique 360 s'étend dans un espace délimité par le bord de l'objectif 370 et un tube de même diamètre que le diamètre externe du logement 390. On s'assure ainsi que le module d'alimentation électrique 360 n'augmente pas un encombrement total du dispositif intensificateur d'image, en particulier un diamètre du dispositif intensificateur d'image.

On décrit dans la suite deux modes de réalisation dans lesquels l'agencement nouveau du module d'alimentation électrique trouve un avantage, même en l'absence d'un réseau de fibres optiques en sortie du tube intensificateur. En particulier, dans ces modes de réalisation, l'agencement nouveau du module d'alimentation électrique libère un espace pour insérer des éléments annexes permettant d'ajouter de nouvelles fonctionnalités au dispositif intensificateur d'image, avec toujours un encombrement réduit.

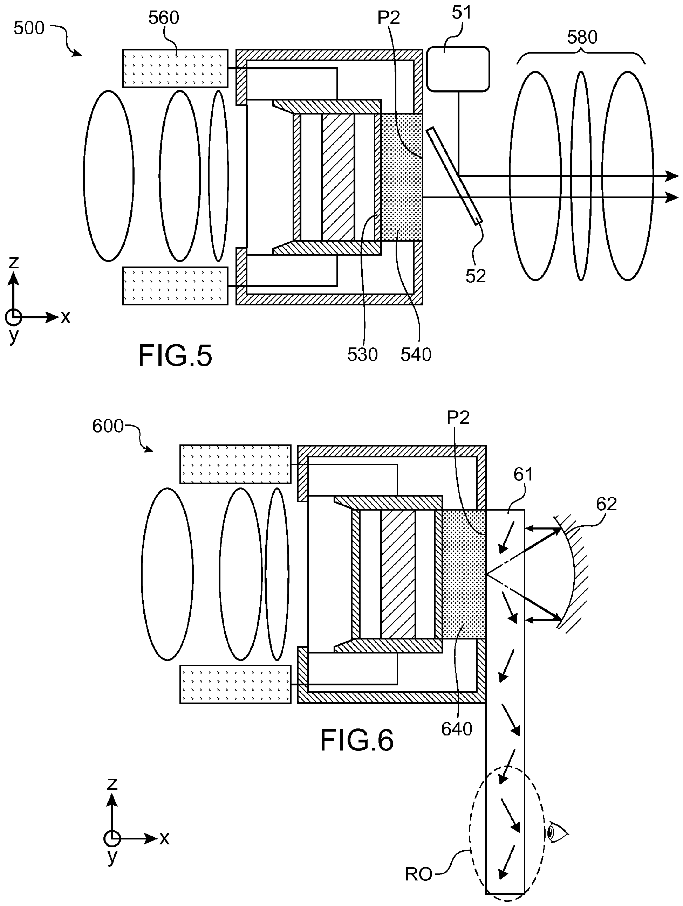

La figure 5 illustre un deuxième mode de réalisation d'un dispositif intensificateur d'image 500 selon l'invention, dans lequel l'espace libéré par le module d'alimentation électrique est exploité pour ajouter des fonctionnalités supplémentaires au dispositif sans augmenter son encombrement.

Le dispositif intensificateur d'image 500 ne se distingue du mode de réalisation de la figure 3, qu'en ce qu'il ne comporte pas de réseau de fibres optiques en sortie du tube intensificateur, et en ce qu'il comporte un moyen de génération et de superposition d'image complémentaire.

Le moyen de génération et de superposition d'image complémentaire comporte ici un module de formation d'image complémentaire 51, et un miroir partiellement réfléchissant 52.

Le miroir partiellement réfléchissant 52 s'étend entre l'oculaire 580 et la surface de formation d'image intensifiée P2. Le miroir partiellement réfléchissant 52 réfléchit une partie de la lumière incidente, et transmet une autre partie de la lumière incidente. Ici, le miroir partiellement réfléchissant 52 est un miroir semi-réfléchissant. Il est incliné d'un angle α relativement au plan (Oyz), avec ici α=45°. Dans des variantes non représentées, le miroir partiellement réfléchissant 52 est remplacé par tout autre élément partiellement réfléchissant, par exemple un cube séparateur, ou une lame séparatrice.

Le module de formation d'image complémentaire 51 est configuré quant à lui pour générer une image dite complémentaire, et projeter cette dernière en direction du miroir partiellement réfléchissant 52, ici le long de l'axe (Oz). Le module de formation d'image complémentaire 51 comprend un écran d'affichage, notamment un écran à base d'OLED (diodes électroluminescentes organiques). Il peut comprendre en outre un processeur, relié à l'écran d'affichage, et intégrant l'électronique nécessaire au pilotage et à l'alimentation électrique dudit écran, ainsi que l'électronique nécessaire à des échanges de données avec l'extérieur (pour recevoir des données relatives à l'image complémentaire à afficher sur l'écran).

Le module de formation d'image complémentaire 51 s'étend en périphérie du miroir partiellement réfléchissant 52, et occupe notamment une partie au moins d'une région occupée, dans l'art antérieur, par le module d'alimentation électrique 560.

Le miroir partiellement réfléchissant 52 est configuré pour superposer l'image complémentaire, projetée par le module de formation d'image complémentaire 51, et une image intensifiée formée au niveau de la surface de formation d'image intensifiée P2. Pour cela, le module de formation d'image complémentaire 51 est configuré pour projeter une image complémentaire, arrivant à incidence 45° sur le miroir partiellement réfléchissant 52, en se propageant selon l'axe (Oz). En utilisation, cette image complémentaire est réfléchie au moins partiellement en direction de l'oculaire 580. De son côté, l'image intensifiée formée à l'extrémité de sortie du faisceau de fibres optiques 540 arrive à incidence 45° sur le miroir partiellement réfléchissant 52, en se propageant selon l'axe (Ox). En utilisation, cette image intensifiée est transmise au moins partiellement en direction de l'oculaire. En aval du miroir partiellement réfléchissant 52, dans le sens de circulation de la lumière (et des électrons) dans le dispositif 500, l'image complémentaire est ainsi superposée à l'image intensifiée.

L'image complémentaire présente avantageusement de dimensions similaires à celles de l'image intensifiée. L'image complémentaire est constituée par exemple par des symboles graphiques. On peut par exemple superposer à l'image intensifiée, des symboles relatifs à des mesures fournies par des capteurs annexes (par exemple affichage de points cardinaux, d'un réticule de visée, etc).

Ici, la surface de formation d'image intensifiée P2 est une surface plane, pour simplifier la superposition de l'image intensifiée avec l'image complémentaire. L'invention couvre cependant également des variantes dans lesquelles la surface de formation d'image intensifiée P2 est une surface non plane, par exemple une surface concave.

La figure 6 illustre un troisième mode de réalisation d'un dispositif intensificateur d'image 600 selon l'invention, qui ne sera décrit que pour ses différences relativement au mode de réalisation de la figure 3.

Dans ce mode de réalisation, le dispositif intensificateur d'image 600 ne comporte pas de réseau de fibres optiques en sortie du tube intensificateur, et comporte un moyen de superposition d'image réelle.

Le moyen de superposition d'image réelle comporte ici un élément de déport 61, et une optique de focalisation 62. L'élément de déport 61 s'étend ici entre la surface de formation d'image intensifiée P2 et l'optique de focalisation 62.

L'optique de focalisation 62 est constituée ici d'un miroir réfléchissant concave, avec son axe optique parallèle à l'axe (Ox) et avec sa face réfléchissante située du côté de la surface de formation d'image intensifiée P2. L'optique de focalisation 62 est configurée pour projeter à l'infini l'image intensifiée P2 formée sur la surface de formation d'image intensifiée P2. Ici, l'image est projetée à l'infini, en direction de la surface de formation d'image intensifiée P2.

L'élément de déport 61 est ici accolé contre la surface de formation d'image intensifiée P2. Cet agencement est rendu possible grâce à l'espace libéré par le déplacement vers l'avant du module d'alimentation électrique.

Là encore, mais de manière non limitative, la surface de formation d'image intensifiée P2 est une surface plane, pour faciliter le contact surfacique avec l'élément de déport 61.

L'élément de déport 61 comprend ici par un guide d'onde, qui recouvre la surface de formation d'image intensifiée P2, et dépasse latéralement au-delà de cette surface jusqu'à une région dite d'observation RO. Ledit guide d'onde est muni d'éléments d'injection, et d'éléments d'extraction. Les éléments d'injection et d'extraction sont constitués par exemple par des éléments diffractifs respectifs, gravés en surface du guide d'onde. Ici, les éléments d'injection, non représentés, s'étendent au regard de la surface de formation d'image intensifiée P2, du côté de l'optique de focalisation. En outre, les éléments d'extraction, non représentés, s'étendent ici dans la région d'observation RO, du côté de l'optique de focalisation.

L'élément de déport 61 est au moins partiellement transparent dans le visible. Il présente par exemple un coefficient de transmission supérieur ou égal à 95%, sur une plage de longueurs d'onde allant de 400 nm à 700 nm.

En utilisation, l'image intensifiée formée sur la surface P2 se propage jusqu'à l'optique de focalisation 62, en traversant de part en part l'élément de déport 61. Au niveau de l'optique de focalisation, la lumière est collimatée, et renvoyée dans le sens opposé. Dit autrement, l'image intensifiée est projetée à l'infini et renvoyée dans le sens opposé. La lumière renvoyée par l'optique de focalisation 62 revient ainsi sur l'élément de déport 62, au niveau des éléments d'injection tels que mentionnés ci-dessus. La lumière pénètre ainsi à l'intérieur de l'élément de déport 62, dans le guide d'onde, et y amorce un guidage optique. Dans le guide d'onde, la lumière est guidée, le long de l'axe (Oz), jusqu'à la région d'observation RO. Lorsqu'elle parvient au niveau des éléments d'extraction mentionnés ci-avant, la lumière est extraite hors du guide d'onde. La lumière extraite est collimatée, comme la lumière injectée initialement dans le guide d'onde. L'élément de déport 61 est donc configuré pour recevoir en entrée une image intensifiée, pour déporter latéralement cette image intensifiée de manière à l'amener jusqu'à la région d'observation RO, et pour extraire cette image intensifiée vers l'extérieur de l'élément de déport 61. L'image intensifiée qui est déportée latéralement à l'aide de l'élément de déport 61, est une image qui provient directement ou indirectement de la surface de formation d'image intensifiée P2. Ici, elle provient indirectement de ladite surface P2, puisqu'elle correspond à l'image intensifiée formée sur la surface P2 puis projetée à l'infini par l'optique de focalisation 62.

En utilisation, l'utilisateur place son oeil au regard de l'élément de déport 61, au regard de la région d'observation RO, là où émerge l'image intensifiée projetée à l'infini et ayant circulé dans l'élément de déport 61. L'utilisateur visualise ainsi, en superposition, l'image intensifiée amenée par l'élément de déport 61, et une scène extérieure vue en transparence à travers l'élément de déport 61. Le dispositif intensificateur d'image 600 forme ainsi un dispositif de vision en réalité augmentée, pour offrir une vue correspondant à la superposition d'une image intensifiée et d'une image en vision naturelle.

Dans ce mode de réalisation, le dispositif intensificateur d'image 600 ne comporte pas d'oculaire disposé directement en sortie du faisceau de fibres optiques.

L'élément de déport 61 est avantageusement solidarisé du faisceau de fibres optiques 640 par collage direct ou couplage de proximité à la face de sortie de ce dernier.

Dans une variante non représentée, l'optique de focalisation s'étend entre la surface de formation d'image intensifiée P2 et l'élément de déport. L'optique de focalisation est alors constitué d'une ou plusieurs lentilles réfractives. Là encore, l'optique de focalisation est configurée pour projeter à l'infini l'image intensifiée formée sur la surface de formation d'image intensifiée P2. Là également, l'image est projetée en direction de l'élément de déport, ici du côté de l'optique de focalisation opposé à la surface P2. L'image ainsi projetée à l'infini pénètre dans l'élément de déport, et est amenée jusqu'à la région d'observation où elle est extraite hors de l'élément de déport. Le tirage optique de l'optique de focalisation peut être très court. L'invention permet alors d'approcher l'optique de focalisation suffisamment près du plan P2, grâce à l'espace libéré par le déplacement vers l'avant du module d'alimentation électrique.

L'invention n'est pas limitée aux exemples décrits ci-dessus. Par exemple, dans une variante non représentée, le dispositif intensificateur d'image ne comporte pas le réseau de fibres optiques, mais un support transparent tel qu'un pavé de verre. Dans ce cas, l'élément de conversion se présente sous la forme d'un revêtement s'étendant d'un seul tenant sur une face dudit support transparent. Le support transparent est transparent à la longueur d'onde des photons émis par l'élément de conversion. La surface de formation d'image intensifiée est alors confondue avec la surface selon laquelle s'étend le revêtement formant élément de conversion, sur le support transparent. Le retournement de l'image « à l'endroit » est réalisé par des optiques réfractives. Les différents modes de réalisation et variantes de l'invention décrits ci-avant peuvent aisément être combinés à cette variante.

Selon d'autres variantes encore, le dispositif intensificateur comporte un faisceau de fibres optiques, formant une entrée optique du tube intensificateur côté photocathode. Dans ce cas, la surface de formation d'image initiale, P1, telle que mentionnée ci-avant, est formée par une extrémité du faisceau de fibres optiques, du côté opposé à la photocathode. Ce mode de réalisation peut être combiné ou non à la présence d'un faisceau de fibres optiques en sortie du tube intensificateur, côté élément de conversion. Ce mode de réalisation peut être combiné à chacun des exemples, variantes et modes de réalisation décrits ci-dessus.

Selon d'autres variantes encore, le module d'alimentation électrique peut être situé à l'intérieur du logement recevant le tube intensificateur et le faisceau de fibres optiques.

L'invention couvre également un système de type jumelle, comportant deux dispositifs intensificateurs d'image selon l'invention, dédiés chacun à un oeil respectif de l'utilisateur.

Le dispositif selon l'invention trouve une utilisation avantageuse dans le domaine de la vision nocturne, pour l'observation de scènes peu ou pas éclairées.

## Revendications

1. Dispositif intensificateur d'image (300 ; 300' ; 500 ; 600) qui comprend un tube intensificateur (350) et un module d'alimentation électrique (360 ; 360' ; 560), dans lequel le tube intensificateur (350) comporte :
- au moins une photocathode (310), configurée pour convertir un faisceau incident de photons en un faisceau initial d'électrons ;
- une galette de micro-canaux (320), configurée pour, en utilisation, générer une pluralité d'électrons secondaires en réponse à la réception d'un électron incident, et configurée pour recevoir ledit faisceau initial d'électrons et pour générer en réponse un faisceau intensifié d'électrons ; et
- un élément de conversion (330 ; 530), configuré pour recevoir le faisceau intensifié d'électrons et pour émettre en réponse un faisceau intensifié de photons, avec la galette de micro-canaux (320) située entre la photocathode (310) et l'élément de conversion (330 ; 530) ;
- un premier ensemble de lentilles (370), nommé objectif, configuré pour conjuguer optiquement une surface de mise au point située à l'extérieur tube intensificateur (350), et une surface de formation d'image initiale (P1) située à l'intérieur ou en entrée du tube intensificateur (350) ;
le module d'alimentation électrique (360 ; 360' ; 560) étant configuré pour fournir au moins une tension de polarisation respective, à chacun parmi la photocathode (310), la galette de micro-canaux (320), et l'élément de conversion (330 ; 530);
**caractérisé en ce que** le module d'alimentation électrique (360 ; 360' ; 560) s'étend entièrement dans
une région entièrement située en amont de la photocathode (310), du côté de la photocathode opposé à la galette de micro-canaux, en périphérie de l'objectif (370)

2. Dispositif (300 ; 300' ; 500 ; 600) selon la revendication 1, **caractérisé en ce que** le module d'alimentation électrique (360 ; 360' ; 560) ne dépasse pas au-delà de l'objectif (370), de part et d'autre de ce dernier et le long d'un axe parallèle à l'axe optique (BB') de ce dernier.

3. Dispositif (300 ; 500 ; 600) selon l'une quelconque des revendications 1 ou 2, **caractérisé en ce que** le module d'alimentation électrique (360 ; 560) comporte une ouverture traversante (361) qui s'étend au regard de la photocathode (310).

4. Dispositif (300 ; 500 ; 600) selon la revendication 3, **caractérisé en ce que** le module d'alimentation électrique (360 ; 560) a une forme d'anneau.

5. Dispositif (300 ; 300' ; 500 ; 600) selon l'une quelconque des revendications 1 à 4, **caractérisé en ce qu'**il comporte en outre un faisceau de fibres optiques (340 ; 540 ; 640), disposé en aval de l'élément de conversion (330 ; 530) dans le sens de propagation des photons et des électrons dans le dispositif intensificateur d'image, avec les fibres optiques du faisceau de fibres optiques (340 ; 540 ; 640) agencées de manière à pivoter sur elle-même une image fournie en entrée du faisceau de fibres optiques, et avec une surface de sortie du faisceau de fibres optiques, du côté opposé à l'élément de conversion (330 ; 530), qui forme une surface nommée surface de formation d'image intensifiée (P2).

6. Dispositif selon l'une quelconque des revendications 1 à 4, **caractérisé en ce qu'**il comporte en outre un support transparent, l'élément de conversion étant formé par un revêtement recouvrant une partie au moins d'une face dudit support transparent, et une autre face du support transparent formant une surface nommée surface de formation d'image intensifiée.

7. Dispositif (300 ; 300' ; 500) selon la revendication 5 ou 6, **caractérisé en ce qu'**il comporte en outre un second ensemble de lentilles (380 ; 580), nommé oculaire, configuré pour conjuguer optiquement la surface de formation d'image intensifiée (P2) et une surface image située à l'extérieur du tube intensificateur (350).

8. Dispositif (500) selon la revendication 7, **caractérisé en ce qu'**il comporte en outre un module de formation d'image complémentaire (51), configuré pour fournir une image complémentaire, ainsi qu'un élément partiellement réfléchissant (52), qui s'étend entre l'oculaire et la surface de formation d'image intensifiée (P2) et qui est configuré pour superposer l'image complémentaire et une image intensifiée formée au niveau de la surface de formation d'image intensifiée (P2).

9. Dispositif (600) selon la revendication 5 ou 6, **caractérisé en ce qu'**il comporte en outre un élément de déport (61), configuré pour déporter latéralement une image intensifiée provenant directement ou indirectement de la surface de formation d'image intensifiée (P2).

10. Dispositif (600) selon la revendication 9, **caractérisé en ce que** l'élément de déport (61) est au moins partiellement transparent dans le visible, pour autoriser la superposition de l'image intensifiée déportée par l'élément de déport, avec une vue en transparence d'une scène environnante.

## Patentansprüche

1. Bildverstärkervorrichtung (300; 300'; 500; 600), die eine Verstärkerröhre (350) und ein Stromversorgungsmodul (360; 360'; 560) aufweist, wobei die Verstärkerröhre (350) Folgendes umfasst:
- mindestens eine Fotokathode (310), die so konfiguriert ist, dass sie einen einfallenden Photonenstrahl in einen initialen Elektronenstrahl umwandelt;
- eine Mikrokanalplatte (320), die so konfiguriert ist, dass sie im Gebrauch eine Vielzahl von Sekundärelektronen als Reaktion auf die Aufnahme eines einfallenden Elektrons erzeugt, und die so konfiguriert ist, dass sie den initialen Elektronenstrahl aufnimmt und als Reaktion einen verstärkten Elektronenstrahl erzeugt; und
- ein Umwandlungselement (330; 530), das so konfiguriert ist, dass es den verstärkten Elektronenstrahl aufnimmt und als Reaktion darauf mit der Mikrokanalplatte (320), die sich zwischen der Fotokathode (310) und dem Umwandlungselement (330; 530) befindet, einen verstärkten Photonenstrahl emittiert;
- eine erste Linsenanordnung (370), die als Objektiv bezeichnet wird und so konfiguriert ist, dass sie eine Fokussierungsfläche, die sich außerhalb der Verstärkerröhre (350) befindet, und eine initiale Bilderzeugungsfläche (P1), die sich in oder am Eingang der Verstärkerröhre (350) befindet, optisch konjugiert;
wobei das Stromversorgungsmodul (360; 360'; 560) so konfiguriert ist, dass es der Fotokathode (310), der Mikrokanalplatte (320) und dem Umwandlungselement (330; 530) mindestens eine jeweilige Vorspannung zuführt;
**dadurch gekennzeichnet, dass** sich das Stromversorgungsmodul (360; 360'; 560) vollständig in einen Bereich erstreckt, der vollständig stromaufwärts der Fotokathode (310) liegt, d.h. auf der Seite der Fotokathode, die der Mikrokanalplatte gegenüberliegt, im Umkreis der Linse (370).

2. Vorrichtung (300; 300'; 500; 600) nach Anspruch 1, **dadurch gekennzeichnet, dass** das Stromversorgungsmodul (360; 360'; 560) auf beiden Seiten des Objektivs und entlang einer Achse, die parallel zur optischen Achse (BB') des Objektivs verläuft, nicht über das Objektiv (370) hinausragt.

3. Vorrichtung (300; 500; 600) nach einem der Ansprüche 1 oder 2, **dadurch gekennzeichnet, dass** das Stromversorgungsmodul (360; 560) eine durchgehende Öffnung (361) aufweist, die gegenüber der Fotokathode (310) verläuft.

4. Vorrichtung (300; 500; 600) nach Anspruch 3, **dadurch gekennzeichnet, dass** das Stromversorgungsmodul (360; 560) eine Ringform hat.

5. Vorrichtung (300; 300'; 500; 600) nach einem der Ansprüche 1 bis 4, **dadurch gekennzeichnet, dass** sie außerdem ein Lichtleiterbündel (340; 540; 640) umfasst, das in der Ausbreitungsrichtung der Photonen und Elektronen in der Bildverstärkervorrichtung nach dem Umwandlungselement (330; 530) angeordnet ist, mit den optischen Fasern des Lichtleiterbündels (340; 540; 640), die so angeordnet sind, dass sie ein am Eintritt des Lichtleiterbündels bereitgestelltes Bild um sich selbst drehen, und mit einer Austrittsfläche des Lichtleiterbündels auf der dem Umwandlungselement (330; 530) gegenüberliegenden Seite, die eine als verstärkte Bilderzeugungsfläche (P2) bezeichnete Fläche bildet.

6. Vorrichtung nach einem der Ansprüche 1 bis 4, **dadurch gekennzeichnet, dass** sie außerdem einen transparenten Träger umfasst, wobei das Umwandlungselement durch eine Beschichtung gebildet wird, die einen Teil mindestens einer Seite des transparenten Trägers bedeckt, und eine andere Seite des transparenten Trägers eine Fläche bildet, die als verstärkte Bilderzeugungsfläche bezeichnet wird.

7. Vorrichtung (300; 300'; 500) nach Anspruch 5 oder 6, **dadurch gekennzeichnet, dass** sie außerdem eine zweite Linsenanordnung (380; 580), Okular genannt, umfasst, die so konfiguriert ist, dass sie die verstärkte Bilderzeugungsfläche (P2) und eine außerhalb der Verstärkungsröhre (350) liegende Bildfläche optisch konjugiert.

8. Vorrichtung (500) nach Anspruch 7, **dadurch gekennzeichnet, dass** sie außerdem ein komplementäres Bilderzeugungsmodul (51) umfasst, das so konfiguriert ist, dass es ein Komplementärbild liefert, und ein teilreflektierendes Element (52) aufweist, das sich zwischen dem Okular und der verstärkten Bilderzeugungsfläche (P2) erstreckt und so konfiguriert ist, dass es das komplementäre Bild und ein verstärktes, an der verstärkten Bilderzeugungsfläche (P2) erzeuges Bild überlagert.

9. Vorrichtung (600) nach Anspruch 5 oder 6, **dadurch gekennzeichnet, dass** sie außerdem ein Verschiebeelement (61) umfasst, das so konfiguriert ist, dass es ein verstärktes Bild, das direkt oder indirekt von der Fläche (P2) zur Erzeugung eines verstärkten Bildes stammt, seitlich verschiebt.

10. Vorrichtung (600) nach Anspruch 9, **dadurch gekennzeichnet, dass** das Verschiebeelement (61) zumindest teilweise im sichtbaren Bereich transparent ist, um die Überlagerung des verstärkten Bildes, das durch das Verschiebeelement verschoben wird, mit einer transparenten Ansicht einer umgebenden Szene zuzulassen.

## Claims

1. An image intensifier device (300; 300'; 500; 600) which comprises an intensifier tube (350) and an electric power supply module (360; 360'; 560), wherein the intensifier tube (350) includes:
- at least one photocathode (310), configured to convert an incident photon beam into an initial electron beam;
- a micro-channel plate (320), configured, in use, to generate a plurality of secondary electrons in response to the reception of an incident electron, and configured to receive said initial electron beam and to generate in response an intensified electron beam; and
- a conversion element (330; 530), configured to receive the intensified electron beam and to emit in response an intensified photon beam, with the micro-channel plate (320) located between the photocathode (310) and the conversion element (330; 530);
- a first set of lenses (370), called objective, configured to optically match a focusing surface located outside the intensifier tube (350), and an initial image forming surface (P1) located inside or at the input of the intensifier tube (350);
the electric power supply module (360; 360'; 560) being configured to supply at least one respective polarisation voltage, to each of the photocathode (310), the micro-channel plate (320), and the conversion (330; 530);
**characterised in that** the electric power supply module (360; 360'; 560) entirely extends in a region located entirely upstream of the photocathode (310), on the side of the photocathode opposite to the micro-channel plate, at the periphery of the objective (370)

2. The device (300; 300'; 500; 600) according to claim 1, **characterised in that** the electric power supply module (360; 360'; 560) does not protrude beyond the objective (370), on either side of the latter and along an axis parallel to the optical axis (BB') of the latter.

3. The device (300; 500; 600) according to any one of claims 1 or 2, **characterised in that** the electric power supply module (360; 560) includes a through opening (361) which extends opposite the photocathode (310).

4. The device (300; 500; 600) according to claim 3, **characterised in that** the electric power supply module (360; 560) is ring-like shaped.

5. The device (300; 300'; 500; 600) according to any one of claims 1 to 4, **characterised in that** it further includes a bundle of optical fibres (340; 540; 640), arranged downstream of the conversion element (330; 530) in the direction of propagation of photons and electrons in the image intensifier device, with the optical fibres of the bundle of optical fibres (340; 540; 640) arranged so as to pivot on itself an image supplied at the input of the optical fibre bundle, and with an output surface of the optical fibre bundle, on the side opposite to the conversion element (330; 530), which forms a surface called intensified image forming surface (P2).

6. The device according to any one of claims 1 to 4, **characterised in that** it further includes a transparent support, the conversion element being formed by a coating covering at least one portion of one face of said transparent support, and another face of the transparent support forming a surface called intensified image forming surface.

7. The device (300; 300'; 500) according to claim 5 or 6, **characterised in that** it further includes a second set of lenses (380; 580), called eyepiece, configured to optically match the intensified image forming surface (P2) and an image surface located outside the intensifier tube (350).

8. The device (500) according to claim 7, **characterised in that** it further includes a complementary image forming module (51), configured to provide a complementary image, as well as a partially-reflective element (52), which extends between the eyepiece and the intensified image forming surface (P2) and which is configured to superimpose the complementary image and an intensified image formed at the intensified image forming surface (P2).

9. The device (600) according to claim 5 or 6, **characterised in that** it further includes an offset element (61), configured to laterally offset an intensified image originating directly or indirectly from the intensified image forming surface (P2).

10. The device (600) according to claim 9, **characterised in that** the offset element (61) is at least partially transparent in the visible, to enable the superposition of the intensified image offset by the offset element, with a view in transparency of a surrounding scenery.
